# EUROPEAN PATENT SPECIFICATION

(11) **EP 0 962 492 B1**
(45) Date of publication and mention of the grant of the patent: **26.01.2005**
(21) Application number: 99109560.5
(22) Date of filing: 13.05.1999
(51) Int. Cl.: C08L 5/08, A62D 3/00, B09C 1/10, C02F 3/34

(54) **Use of chitin and/or derivatives thereof as biocatalysts in the remediation of contaminated soils and fluids**
Verwendung von Chitin und/oder Derivaten als Biokatalysatoren für die Sanierung kontaminierter Böden und Fluide
Utilisation de chitine et /ou dérivés comme biocatalyseurs pour l'assainissement de sols et de fluides contaminés

(30) Priority: 15.05.1998 IT MI981074
(43) Date of publication of application: 08.12.1999
(73) Proprietor: Fornaro, Edoardo, 6900 Lugano (CH)
(72) Inventor: Fornaro, Edoardo, 6900 Lugano (CH)
(74) Representative: Minoja, Fabrizio, Dr.

(56) References cited:
- EP-A- 0 594 125
- US-A- 4 534 965
- US-A- 4 882 066
- US-A- 5 441 641
- PATENT ABSTRACTS OF JAPAN vol. 95, no. 2, 31 March 1995 (1995-03-31) & JP 06 311820 A (FUMIO MURATA) & DATABASE WPI Week 9504 Derwent Publications Ltd., London, GB; AN 27209
- EDGAR S. LOWER: "Polymers from the sea Chitin & Chitosan" MANUFACTURING CHEMIST, vol. 55, no. 9, 1 September 1984 (1984-09-01), pages 73-74, XP002113288 Poole, Dorset

## Description

This invention refers to the use of chitin and/or derivatives thereof for the decontamination of soils contaminated by organic compounds.

### BACKGROUND OF THE INVENTION

Bioremediation, intended as a treatment technology capable of eliminating or reducing organic contaminants in the soil matrix, transforming them by means of the biodegradable action of micro-organisms, is universally considered, wherever applicable, the most environment friendly decontamination technology which makes the most economic use of energy resources; average unitary treatment costs are equal to one tenth of incinerating costs and correspond to 25-30% of disposal costs in a controlled reclaimable waste tip for soil washing (M.C. Leahy and R. A. Brown: "Bioremediation: optimizing results", Chem. Engineering, May 1994).

Where applicable, bioremediation determines the elimination (rather than transfer to other environmental sections) of contamination in the soil; it makes it possible to comply with guiding criteria, generally recognized, which favor technology of decontamination intervention "in situ" and/or "on site" without expensive, dispersive and uncontrollable transport to "off-site" areas towards treatment platforms or waste tips.

### STATE OF THE ART

Bioremediation is a method for the cleansing of contaminated water, air and especially soil which uses those self-purification mechanisms already existing in nature.

However versatile the natural and native aerobic micro-organisms may be when degrading organic contaminants in the soil, it has always been considered that many chlorinated compounds, such as TCE, PCB, poly-aromatic hydrocarbons (PAH) with high molecular weight, as well as a vast range of pesticides such as Lindane and DDT, are not susceptible to the biodegradable action of native and/or activated, genetically engineered micro-organisms (Chemical Engineering - May 1994, "Bioremediation: optimizing results" and Rapporto Convegno Nazionale "Verso il manuale comunitario per la bonifica di siti contaminati", Milan 17.01.1995).

The experts agree to limit soil decontamination technologies which use biological treatment to hydrocarbons and halogen-free compounds, making use, for other organic compounds, of thermal treatment (incineration), physical treatment (steam extraction or soil flushing) and chemical treatment (dehalogenation or extraction with fluids in critical conditions) while awaiting innovative processes which will make it possible to effectively break down those compounds non susceptible to biological treatments.

Today's processes for the biological treatment of contaminated soil are capable of degrading hydrocarbons and non-chlorinated organic compounds by means of oxidation. Through a sequence of metabolic steps, the micro-organisms already present in the soil and suitably activated, oxidize the organic compounds to CO₂ and water while they incorporate part of the liberated carbon into the development of a new biomass.

All necessary factors essential for the development of the metabolism of the micro-organisms must be present for efficient biological treatment. Such elements are principally carbon, oxygen, nitrogen and phosphorus along with sulfur, calcium, potassium and magnesium.

Moreover, even assuming that the organic contaminants are biodegradable and that suitable micro-organisms are present, many other factors play an important role in achieving successful decontamination: the physical-chemical characteristics of the soil and the distribution and quantity of pollutants.

All these conditions have represented an insurmountable series of limitations to the use and diffusion of the technique of biological treatment for contaminated soil.

The greatest limitation derives from the nature of the pollutants since, even if the native micro-organisms can be very versatile when breaking down contaminants, many of the most significant organic compounds simply cannot be decomposed in reasonable and acceptable lengths of time.

Among non-degradable contaminants must be included chlorinated organic compounds, such as TCE and halogenated aromatic hydrocarbons, such as PCBs, polyaromatic hydrocarbons (PAH) with high molecular weight and many pesticides (e.g. Lindane, DDT, Molinate, Atrazine, Methlyparathion, Folpet, Captan, etc.).

The possibility of getting around the intrinsic limitations attributed to the nature of the pollutants by means of biological treatment which uses super-specialized or genetically engineered micro-organisms, is not considered advantageous for two reasons:
in large-scale biological treatment, the natural competitiveness of native micro-organisms prevails over micro-organisms cultivated in the laboratory; in fact, the claimed specialization of the latter yields marginal results when compared with the spreading and colonizing capacity of the native and non-native micro-organisms fit to the specific conditions of the soil matrix;
genetically engineered micro-organisms, even if produced to attack the most resistant contaminants, must be designed to survive outside the laboratory or, alternatively, the conditions of the soil matrix must be adapted so that they can survive.

The most difficult barrier, however, is represented by the evident wariness of Governments and Control Authorities who need proof of the safety and protection of the risks connected to health and the environment every time the matter of adapted or genetically engineered micro-organisms arises.

It would, therefore, be desirable to always make use of native micro-organisms and to enhance their capability of carrying out degradations of organic pollutants.

Surprisingly, it has been discovered that the use of innovative bio-stimulators makes it possible to decontaminate soil contaminated by chlorinated organic compounds with native micro-organisms that, until now, were unable to break down these pollutants. With the use of such bio-stimulators it is also possible to strongly reduce the time needed by the native micro-organisms to break down the organic pollutants which are susceptible to biodegradation in the currently available processes.

Said biocatalysts and biostimulators are selected from chitin and/or derivatives thereof and are added to soil in such an amount as to provide an amount of chitin and/or derivatives thereof corresponding to 0.1 to 5.0 Kg of per 1 m³ soil.

This method can also be applied to organic compounds which, in the processes so far available, are not susceptible to the biodegrading action of native micro-organisms, such as halogenated hydrocarbons, high molecular weight polyaromatic hydrocarbons and pesticides.

The method according to this invention allows to strongly reduce the time needed for degrading substances which are currently classified as hard to degrade, such as, but not limited to, e.g. TCE, PCE, PAH, Vinyl Chloride, PCBs, DDT, Chlordane, Heptachlor. A very significant decrease of the processing time is achieved with the method of the present invention in the case of substances which are currently classified as moderately degradable, such as, but not limited to, e.g. #6 Oil, Crude Oil, Lubricating Oils, Coal Tars, Creosotes, Pentachlorophenol, Nitrobenzene, Aniline, long-chain aliphatics, Phthalates.

Examples of readily degradable substances to which the present process can be applied with achievement of a strong reduction of processing time are represented by Gasoline, Jet Fuel, Diesel Fuel, Toluene, Benzene, Isopropyl Alcohol, Methanol, Acetone, Ketones, Phenols, Acrylonitrile.

Another object of the invention is the bioaugmentation of soil obtained with the use of chitin and/or derivatives thereof. Chitin and/or its derivatives are mixed to the native microorganisms of a certain soil matrix and the mixture thus obtained is then added, after a certain time, to the soil matrix to be decontaminated. This results in an effective bioaugmentation and an enhanced bioremediation capacity. The bioaugmentation of soil matrices obtained by the introduction of enhanced microorganisms is particularly important in the lack or absence of inducing substrates.

Chitin and derivatives thereof also improve the bioavailability of pollutants to the microorganisms, in that they improve the rate of desorption of the organic compounds from the soil matrix particles. The bioavailability of pollutants in soil is, in fact, a critical parameter for the performance of any biological treatments.

Chitin is a crystalline polysaccharide typically constituted of B-(I-4)2-acetamido-2-deoxy-n-glucose units, some of which are deacetylated. This natural polymer is termed poly-N-acetyl-D-glucosamine and is similar to cellulose except that the c-2 hydroxyl groups have been completely replaced by acetamido groups. Structurally, chitin is also considered to occur in alpha (piles of chains alternately antiparallel) and gamma (piles of chains arranged in sets of threes with two parallel and one antiparallel) forms, in addition to the more common beta (parallel chain) form. Similarly, both chitin containing compounds and derivatives of chitin share many characteristics of this parent compound, although certain microbes do not do as well with a specific derivative, other microorganisms may do significantly better.

Many characteristics of chitin liken it to a bacterial biofilm in many respects. These similarities are largely responsible for its:
(1) universal compatibility with all microbes tested,
(2) enhanced populations of desired organisms,
(3) significant survivability of native and nonnative organisms.
(4) significant shifts in the native and non native populations
(5) improved biodegradation performance in all-cases, and
(6) massive potential for use in bioremediation of pollutants.

Chitinous substrates serve the microbes as an ideal surface for colonization since it causes and/or allows:
a. attaching to chitinous surfaces through direct physical hydrophilic and electrostatic attractions (or repulsion of certain microbes),
b. the porous structure results in faster irreversible physical and chemical microbe binding,
c. holding microbial cells in close proximity allowing metabolite exchanges of homogeneous and heterogeneous microbes which sustains growth,
d. carrying or delivering of selected beneficial microbes,
e. modification of additives to be made which can make the substrate more appealing to specific beneficial microbes,
f. more rapid and extensive formation of exopolymer biofilms,
g. functioning of chitin as a biochemical barrier to protect many microbes,
h. microcolony formation for protection from some toxins which may be deadly to microbial inhabitants,
i. attracting soluble polymers and other micronutrients to the surface,
j. many pollutant compounds to be attracted and adsorbed to its surface, and
k. the combination of enzymatic capabilities of several microbes in a consortium to degrade a growth substrate.

These benefits result in actual exopolymer biofilm production which has been shown to protect and in some cases serve as a reserve nutrient substrata. This capability is combined with the known affinity of chitin and derivatives for heavy metal, halogenated compounds, and phenols among other pollutant compounds. The combination of these properties provides a superior product due to its biocatalytic function.

Chitin and its derivatives use in the treatment of wastes, principally wastewater, has been extensive and a few such examples follow:

The use of chitin or derivatives with or without active carbon to remove odors and polluting metals from waters is shown in Japanese Patent 61-2910:38; 1986.

The use of chitin derivative for heavy metal ion collection is disclosed in Japanese Patent 61-118485; 1986.

The use of microfungal chitin in a filter to recover metals is shown in United Kingdom Patent 2199315; 1988.

Chitin derivative used as a heavy metal collector for mercury etc is shown in Japanese Patent 62-262743; 1987.

Chitin's use to decontaminate liquid streams using chitin coated porous solids to remove metal contaminants or halogenated organic compounds has been disclosed (LSU US Patent 4,775,650; 1988).

Chitin and derivatives for filters used in clarification of water is disclosed (Unitika, Japanese Patent 60-225688; 1985).

Chitin and/or its derivatives use in other areas not associated with biodegradation which describe functions associated with microbes are limited but a few such examples follow:

Chitin derivatives are useful in the immobilization of enzymes from fermentation. Japanese patent 62-158484.

Chitin when used as a substrate for the growth of streptomyces microbes to produce a useful fungicidal antibiotic inoculant for seeds in Brown, US Patent 4,534,965, 1984.

Demineralized chitin for use as a nematocide Milch, US Patent 4,536,207, 1984.

Fungicidal effects of chitin and chitosan on fungi with cell walls of varying composition (Allan and Hadwiger, 1979).

Enhance growth of actinomyces on agar plates with chitin by Mitchell, 1963.

Decomposition of chitin in soils (Okafor, 1966).

Chitin and derivatives use in soil additive and/or seed treatment formulations has been variously described in literature and several foreign patents for agriculture, probably due to apparent plant growth enhancing effects, as generally described by Hadwiger, US Patent application 795,702, 1984.

A chitin derivative (chitosan) has been examined as an entrapment and encapsulation medium for formation of matrices suitable for growth and loading of living cells. This is targeted as a delayed release delivery system or carrier of biocatalyst enzymes.

Loading based on cells/g support was very high while growth of immobilized species was about 35% of free cells (Rha, Rodriguez-Sanchez, and Kienzle-Sterzer, Biotechnology of Marine Polysaccharides, MIT, 1984).

The general use, however, to carry, trap, protect, and colonize microorganisms already in the environment or introduced with chitin and/or derivatives thereof into the environment particularly in the field if biodegradation is a new concept of vast importance ecologically and economically.

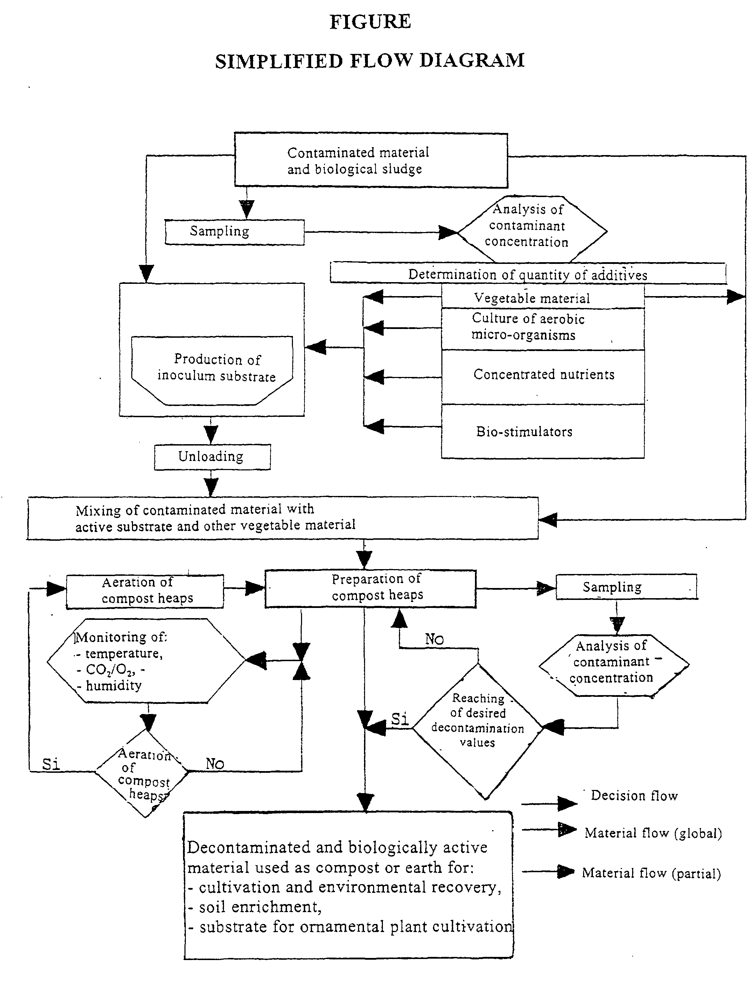

The characteristics and the advantages of this invention will be described in detail, also with the use of examples and figures, the figure schematically representing the process disclosed by the present invention.

### DETAILED DESCRIPTION OF THE INVENTION

Advantageously, the method according to this invention goes beyond the present application limits to the use of bioremediation, extending the technique of biological treatment to the cases of soil contaminated by organic substances not susceptible to the action of native micro-organisms; the extension of bioremediation to these cases, which are the most numerous and dangerous, can offer the best solution to many environmental pollution situations, sites in disuse, uncontrolled waste tips and accidentally contaminated soil.

Furthermore, in the case of soils contaminated by organic substances which are susceptible to the action of native microorganisms in the currently available processes, application of the process according to the present invention brings about a strong increase of the biodegradation rate, thus significantly shortening the time involved in the decontamination of the soils.

The method according to the present invention is based on the unprecedented use of chitin and/or derivatives thereof as bio-stimulators which promote the biodegrading activity of native microorganisms.

Chitin and derivatives in any molecular weight or particle size are useful in the nutrition, survivability, and colonization of beneficial microorganisms. Chitin may be easily customized for individual microorganisms to stimulate their growth by combination with specific nutrients, salts, vitamins enzymes, emulsifiers, accelerators, moisture retainers, or other recognized growth or metabolism stimulating substances to selectively enhance certain microbes (native and/or nonnative) in the polluted environment. Likewise, the compound also may be combined with substances which inhibit known competitors or predators of the beneficial microbe to effectively increase colonization of the microbial populations naturally present or artificially added to the polluted site.

Chitin may also be customized for its effective life in the soil. Chitin which has been purified and considerably hydrolyzed is a highly bioactive compound. In this embodiment, it greatly stimulates microbial growth and enzyme activity and is highly effective as a microorganism colonizing surface, however, it degrades more readily in the soil than less hydrolyzed chitin. Hydrolyzed chitin may be produced by various methods enzymatic, chemical, mechanical, or microwave energy among others.

Although it is more expensive to produce than either processed chitin or certainly the partially processed chitin protein complex (demineralized chitin), its potential for use in the emergency cleanup of pollutant spills, where time is of the essence, represents a major advancement in useful bioremediation. Substantially non-degraded chitin and derivatives are more beneficial in certain circumstances. Long term residual functionality for microorganisms in chitin is required to achieve some complex bioremedial detoxifications/degradations.

Chitin may be used to trap the microbes into a microenvironment providing an adequate surface for colonization, immobilization, moisture, nutrients, physical protection from certain pollutants, and biochemical protection against some predator microbes. These functions serve to enhance the microbe(s) overall performance in the ecosystem. The chitin may or may not be modified for the specific microorganisms being introduced.

Chitin and/or derivatives may be added to the environment to chelate certain pollutant materials, particularly toxic heavy metals, halogenated compounds and phenols among others with a known affinity for chitin and/or derivatives. In this case, the chitin traps and binds the metals, serves as a temporary artificial biofilm for microbes that degrade such elements, either native or environmentally introduced. Efficiency of the microbial biocatalyst and carrier used in this manner is greatly increased by its attraction for end "trapping" of both pollutants and microbe in the same microenvironment.

Chitin or its derivatives can also serve as an adsorption or absorption substrate whereby the pollutant is drawn to the microorganisms which colonize the chitin thereby simplifying their foraging function. This significantly increases the speed and efficiency of microbial action (i.e. bioremediation). Further, the microbial biocatalyst provides a physical protection from excessively high doses of pollutant which could be toxic to the organism. Secondary protection is provided against predator organisms due to bactericidal effects of the microbial biocatalyst. Furthermore, these may be modified by supplementing the microbial biocatalyst with antibiotics or other compounds to allow maximum metabolic activity of the beneficial microorganisms.

Chitin and/or its derivatives also serve as a carbohydrate substrate for microbial production of exopolysaccharides. Regulation of this function is very important under frequently encountered environmental conditions. For example, bacteria in culture produce large amounts of exopolysaccharides when nitrogen concentration and temperature are low, and there is an abundance of carbohydrates (F. A. Troy II Annual Review Microbiology, 1979). These exopolymers, frequently rich in protein, form as a slime or mucus biofilm exuded by a diverse range of plants and animals from bacteria and fungi to fish.

Most microbial exopolymers are exopolysaccharides and usually are negatively charged due to the presence of acids. Structurally, exopolymers may be fibrous strands, fibrous networks, or gels. Production of exopolymers is highest in the stationary phases of growth. Functionally it is important to microbes in the attachment process to surfaces, nutrient scavenging and in some cases storage, microbial colonization, and for protection from the environment. These exopolymers protect the organism from desiccation in soils (when fully hydrated may hold up to about 250 times their weight in water), viruses or bacteriophages, and from various antibiotics. They may also function as a diffusion barrier whereby oxygen may be excluded, toxic substances may be excluded, or ion exchange may be altered principally for the benefit of the exuding organism. Some exopolymers actually contain bacteriolytic enzymes or antibiotics to protect the organism from pathogens. Exopolymers frequently are an aid to movement in an aquatic media.

The ability of various microbes to utilize exudates of other microbes for their own advantage, however, is well known and frequently occurs. By its very nature other microbes are attracted and attach to glycocalyx matrices forming heterogeneous colonies when suitable conditions for their growth are met. This frequently leads to symbiotic and dependent relationships in microbial growth and proliferation. A condition under which this is ideal exists, when these functions are related to nutrition of various microbes and one partially degrades a pollutant and another uses that degraded compound as a nutrient or metabolite for further degradation. This cascading type of compound degradation is very important to the speed and total degradation of complex organic pollutants.

Chitin or its derivatives may serve as a catalyst for enzymes produced by microorganisms which are useful in its respiration, replication or in reduction of pollutant compounds. This function is shown by enhanced microbial growth and more rapid degradation of pollutant compounds by microorganisms in a laboratory pure culture environment. Also it is shown by decreased decolorization times of stains in the laboratory which indicates increased populations and/or increased enzyme productions.

Typically, a quantity of chitin used as a microbial biocatalyst in a soil amendment can range in concentration from as low as 0.001% to 10.0% (w/w soil) or more of the soil. The cost effectiveness of the microbial biocatalyst is largely a function of dosage. The decision of when to use higher doses in an actual situation will probably be dictated by kind and location of spill, size of spill, risk to the public, and risk to the environment versus cost. The basic microbial biocatalyst in high concentrations (10.0% w/w soil) in soils for example may well run in excess of $30 per cubic foot of treated soil for materials alone. The effectiveness of chitin and derivatives in low concentrations (0.2% w/w soil) is dramatically enhanced by homogeneous incorporation into another nutrient amendment such as cellulose, starch, glucose, other polysaccharides or other inert non toxic substances for the microbial substrate and/or as an extender. However, the environmental efficacy (notably speed and total pollutant reduction for bioremediation) of the microbial biocatalyst is often significantly enhanced by addition of higher proportions of chitin (up to 100%) of the soil amendment.

After an optional first step of site assessment and appraisal of the biodegradability of the single contaminants by the already present native micro-organisms - adapted, if necessary, to the optimal conditions for their development - the method in the first aspect of the invention includes the following steps:
the soil contaminated in depth is brought to the surface, preferably without plowing, so as to treat it on-site or to take it away to a disposal platform for treatment off-site; the soil is mixed with green (vegetable) material to form piles, chitin and/or derivatives thereof are added to the mass of contaminated soil and vegetal material and the piles are treated with conventional composting methods and, if required, left in the open covered with a transpiring and waterproof sheet. In an alternative embodiment, a part of soil/vegetal material mixture is added with chitin and/or derivatives and introduced into a mixing reactor to produce a super-active inoculum, which is then added to the rest of the mixture.

The step of generating a super-active inoculum represents an effective bioaugmentation of the microorganisms, which is particularly suited to soils that are heavily contaminated and relatively poor of native microorganisms.

Alternatively, the biostimulators according to the invention, the nutritious substances and the culture of native microorganisms can be directlty added to the piles of soil and green material without the need for the generation of a super-active inoculum in a reactor. The choice between the two alternatives will depend on the site conditions and the level and type of pollutants.

During this process, it could be useful to monitor the functional parameters such as temperature, humidity, quantity of contaminants and their respective metabolites, in order to maintain optimal conditions of the aerobic biodegradation process.

The final result can also be evaluated by means of a bio-evaluation through testing of the growth of various vegetable species.

Advantageously, the soil decontaminated by using the method according to the invention can be re-utilized in view of recovery of the contaminated soil, even for agricultural uses.

In another possible embodiment of this invention, the contaminated soil, excavated and sifted if necessary, is mixed with composite material of vegetable origin. Preliminary laboratory tests can be useful to indicate the suitable quantity.

The mixture is then formed into piles, part of which is taken to be activated in a mixer reactor.

The addition of bio-stimulators, concentrated nutrients and cultures of pre-activated native micro-organisms, transforms the material in the mixer, kept at optimal temperature and humidity conditions, into a super-active inoculum which, after a pre-established length of time, is removed from the bio-reactor and distributed onto the lined up piles.

The material is then mixed homogeneously and treated as traditional compost. Preferably, the material is left in the open but protected with sheets which guarantee transpiration and waterproofness.

Periodic controls, preferably daily, of the temperature of the compost piles, the periodic mechanical aeration, addition of more inoculum if necessary and correction of the humidity all permit regular decomposition of the contaminants, and their complete disappearance can be controlled by analyses carried out at regular intervals until the objectives of the decontamination treatment have been reached.

Pilot tests carried out on open fields indicate, according to the contaminants present and their quantity, average treatment times of between 12 and 24 weeks in order to reach values compatible with a correct risk-benefit balance (risk analysis) or with complete soil bioremediation.

The compatibility of the material obtained at the end of the treatment with the objectives initially set out, is further confirmed by carrying out phyto-toxicity tests on vegetable species particularly sensitive, during the germination and biomass development steps, to residues of the contaminants and their metabolites in the culture substrate.

The figure illustrates a typical embodiment of the method described in this invention. It is obvious to the expert in this field that the essential point of this invention is the use of the bio-stimulators described above. Therefore, any variations in the process, here described schematically by way of examples, fall within the scope of this invention.

Fundamentally, the contaminated soils are treated so as to obtain a substrate for inoculum, with conventional collecting techniques or suitable sampling. If considered necessary or desirable, the contaminated material can be sampled for a preliminary analysis of the concentration of the contaminants, so as to optimize the preferable quantity of bio-stimulators to be added.

The inoculum substrate is treated in a suitable reactor to reinforce the population of native micro-organisms. Generally, the treatment time varies from 24 to 36 hours. The substrate is produced with conventional methods which include, besides the bio-stimulators of this invention, for example, the addition of vegetable material, one or more cultures of aerobic native micro-organisms and preferably concentrated nutrients.

Once this inoculum substrate is ready, it is unloaded from the reactor and mixed with the contaminated material and other vegetable material, if necessary.

The contaminated and inoculated material is then distributed, e.g. as piles, for the successive compost step. As mentioned before, the use of an inoculum is not compulsory, as the biostimulators according to the invention in certain cases can be directly added to the blend of contaminated soil and green material to be sent to the compost step. The compost step does not require any particular measure and is carried out following conventional methods. During this step, some tests to control the essential parameters, such as temperature, gas (e.g. oxygen and/or carbon dioxide) and humidity can be carried out. Further analyses of the contaminants can also be carried out to follow the degradation curve.

Once the decontamination is terminated, the soil can be used as compost or soil for cultivation and environmental recovery, soil enrichment, substrate for the cultivation of ornamental plants.

In another embodiment of the present invention, the method can be complemented with the decontamination method of air sparging, soil vapor extraction (SVE) and/or bio-venting, permitting biodegradation in situ of the organic compounds not susceptible to bio-remediation.

The following examples further illustrate the invention.

### Example 1.

### Test of nutritional substrates effecting growth of the bacteria

Chitin and derivatives were tested along with other common fermentable carbohydrate polysaccharides and other compounds at a rate of one gram compound (250 microns or less particle size) in 100 ml distilled water to determine the effectiveness of prolonged exposure to such nutrient mediums. Discs (12 mm) of the organism, Phellinus weirii grown on SO mm plates of Sabouraud Dextrose Agar (Prepared Media Laboratory, Tualatin, OR) and samples taken after uniform plate growth was obtained. These discs were exposed to the above compounds for up to 96 hours with discs removed at 4, 24, 48, 72, and 96 hours then grown on the same type agar. Areas of growth (predominantly circular) were measured in a blind study at 24 and 48 hours after removal from the compounds in sterile solution. The table below summarizes results of growth as a percent of control placed in sterile water:

| Compound | Growth in 24 hours on agar As a % of control | Growth in 48 hours on agar |
|---|---|---|
| Control | 100 | 100 |
| Sawdust | 112 | 109 |
| glycogen | 93 | 103 |
| Starch | 113 | 113 |
| Chitosan | 66 | 97 |
| Chitin-protein | 126 | 112 |
| complex | 139 | 112 |
| Chitin | 128 | 114 |
| Purified chitin | 109 | 103 |
| Microcrystalline | 96 | 104 |
| chitin | 78 | 104 |
| Soybeans | 63 | 86 |
| Beta carotene | | |
| (10%) | | |
| Wheat | | |

In the above table it is readily evident that chitin based compounds caused significantly more rapid colonization and growth in 24 hours with the exception of chitosan. Its inhibition largely disappeared after 48 hours. With this organism, only microcrystalline chitin showed considerably less activity than other forms of chitin in promoting microbial growth.

### Example 2

### Addition of other adjuvant compounds with chitin

In a test paralleling Example 1 the efficacy of adding other compounds was examined. The table below summarizes the results of these tests:

| Compound | Growth in 24 hours on agar % of control | Growth in 48 hours on agar % of control |
|---|---|---|
| Control | 100 | 100 |
| Chitin with (1%) Humic acid | 63 | 86 |
| Chitin with (1%) EDTA | 128 | 120 |
| Chitin with (1%) Silicon dioxide | 107 | 104 |

The addition of other beneficial compounds for the organism can be readily seen in the above table. Although not all compounds may benefit all microbes the potential for customizing the substrate chitin with other compounds is frequently very beneficial. Of note in this trial was the exceptional response of silicon dioxide with only four hours exposure to the compound which resulted in growth of nearly twice (196%) that of control growth.

### Example 3.

### Chitin accelerates and enhances total degradation by microbes:

This example demonstrates the effectiveness of chitin both with a nonnative microbe and added alone to natural soils which are contaminated with pentachlorophenol. The nonnative microbe where used is Phellinus wairii. Ground chitin was added at a rate of 10% (w/w) of dry soil with the following effects:

| Treatment (ppm of PCP) | 2 weeks | 4 weeks | 6 weeks | %Control |
|---|---|---|---|---|
| Control | 67.4 | 67.4 | 67.4 | 100 |
| Chitin only | 10.0 | 15.0 | 33.0 | 49 |
| Chitin with microbe on wood chips | 15.0 | 6.2 | 5.9 | 9 |
| Microbe on wood chips | 30.2 | 19.5 | 15.0 | 22 |

Although the action of the chitin with native soil microbes and on the Pentachlorophenol is not fully explained by its dramatic initial reduction and subsequent rise in detectable levels, it is believed to adsorbed the pentad from the soil and allowed temporary immobilization of the compound. The native microbes are probably better at degrading the chitin thereby causing its inherent release or the Pentachlorophenol back into the soils where it is being detected. Due to test design, the trial was terminated at six weeks. The addition of an organism with a known metabolic function for pollutant degradation, however, was highly successful at reducing pollutant concentration to below 10% of original contamination with only a single treatment and without aeration The biocatalyst was nearly three times as effective in total pollutant reduction as the microbe alone.

### Example 4

### Chitin effective rate on microbe degradation in lab environment:

Trials were conducted in a homogeneous artificially contaminated sand oil mixture to determine the effectiveness of chitin concentration in a range of rates at 0.5%, 2.5%, and 6.0% (w/w sand) and contaminated with a 6% Pentachlorophenol (PCP) solution in light mineral oils. Also apparent is chitin's ability to adsorb the PCP from the sand and thereby lower contaminant levels. This protection is only temporary, however, unless reduction by microorganisms is available. Controls were double monitored and averages were taken from the two readings, 770 and 820 mg/kg. All readings under "2 weeks" are in mg/kg or parts per million (ppm).

| Treatment (ppm PCP) | 2 weeks | %. Control |
|---|---|---|
| Control | 795 | 100 |
| Chitin (6%) | 320 | 40 |
| Chitin (6%) With microbe on wood chips | 350 | 44 |
| Microbe on wood chips only | 665 | 84 |
| Chitin (2.5%) | 350 | 44 |
| Chitin (2.5%) with microbe on wood chips | 795+ | 0 |
| Chitin (0.5%) | 280 | 35 |
| Chitin (0.5%) with microbe on wood chips | 795+ | 0 |
| Chitin (0.5%) with microbe plus 2% sawdust | 310 | 39 |

This example indicates that microbes which were added separately were not protected by chitin alone until its rate exceeded 2.9% but less than 6%. The concentration of PCP, however, is used at a normally lethal rate for the microorganism. The concentration of PCP used is considered hostile to the microbe. The adsorbent properties of the chitin for this phenol pollutant are well demonstrated even at very low use rates. The combination with another polysaccharide (cellulose) allowed the microbes to survive with the very low dose rate of 0.5% chitin with 2% sawdust. Due to the wide range of cost between the two compounds, it appears to be highly cost effective when used in this fashion. The lowest rate, in fact, presented both the best adsorption rate as well as the best degradation with the organism.

### Example 5.

### Chitin effects on microbe survivability in hostile environments:

Chitin was examined for its ability to sustain viable microorganisms of a non-spore forming fungi in a wide range of adverse conditions which could be encountered in the environment. All rates are shown as a percent (w/w) of composition added to the soil. All components of compositions are shown as a percentage of total composition. All readings "% Control" are recorded as percent (viable organisms) of composition versus a like treated cellulose control.

| Trial conducted: | Rate | Composition | % Control |
|---|---|---|---|
| a. Resistance to desiccation: (Soils reduced to 8% moisture for 72 hours) | 10% | Chitin(100%) | 127 |
| | 5% | Chitin(100%) | 115 |
| | 1% | Chitin(100%) | 190 |
| | 0.5% | Chitin(100%) | 285 |
| | 1% | Chitin(50%) | |
| | | starch(50%) | 250 |
| | 5% | Chitin(20%) | |
| | | Starch(80%) | 185 |
| | 10% | Chitin(100%) | 80 |
| | 5% | Chitin(100%) | 65 |
| | 1% | Chitin(100%) | 45 |
| | 0.5% | Chitin(100%) | 22 |
| | | Chitin(50%) | |
| | 1% | Starch(50%) | 34 |
| b. Recovery time post dissiccation (% rime required to achieve initial colony counts following rehydration) | 5% | Chitin(20%) | |
| | | starch(80%) | 28 |
| c. influence of pH changes: (soils increased by 2 and decreased by -2 for 72 hours) | 10% | Chitin(100%) | 165 |
| | 5% | Chitin(100%) | 185 |
| | 1% | Chitin(100%) | 337 |
| | 0.5% | Chitin(100%) | 585 |
| | 1% | Chitin(50%) | |
| | | Starch(50%) | 390 |
| | 5% | Chitin(20%) | |
| | | Starch(80%) | 292 |
| d. Influence of temperature changes: (Soils increased by +20°C and decreased by -15°C for 36 hours each) | 10% | Chitin(100%) | 110 |
| | 5% | Chitin(100%) | 132 |
| | 1% | Chitin(100%) | 180 |
| | 0.5% | Chitin(100%) | 130 |
| | 1% | Chitin(50%) | |
| | | Starch(50%) | 142 |
| | 5% | Chitin(20%) | |
| | | Starch(80%) | 145 |

This example demonstrates that the invention is useful in sustaining the viability of organisms subjected to stresses similar to those which may be encountered in the environment and consequently can be an effective indicia of survivability.

### Example 6

Pilot test on soil contaminated "ad hoc" by the most common pesticides.

Piles were formed after activation in the reactor.

The compost step lasted 3 months.

| | |
|---|---|
| Quantity of soil | 2000 kg |
| Type of soil (pH = 7.7, T = 18°C) | sandy-silt |
| Temperature in the bio-reactor | 51.5 °C |
| Temperature in the piles | 44°C minimum, 61°C maximum |
| Bio-stimulators used: natrel (as concentrated nutrient) | 0.25g/kg |
| pedian | 5 g/kg |

Pedian® is an inoculator for compost produced by a concentration of polysaccharides, containing about 10.5% by weight of chitin and 10.5% by weight of chitosan and known on the market for leaf and garden refuse compost together with wood, kitchen waste, manure.

Pedian® contains 210g polysaccharides/Kg (105g chitin + 105g chitosan).

Natrel® is a highly concentrated substrate produced by organic raw material of the food industry.

The breaking-down progress of the various contaminants are given hereinbelow (in mg/kg).

| Material | Atrazine | Pirimor | Captan | Foipet | Malathion | Etilparathion | TMTD |
|---|---|---|---|---|---|---|---|
| Initial | 500 | 100 | 70 | 18 | 1000 | 40 | 400 |
| Reactor after inoculum (24 hours) | 449 | 81 | 0,2 | 0,1 | 788 | 12 | 309 |
| Piles after 96 hours | 148 | 38 | 0,2 | n.a. | 3 | 3 | 73 |
| Piles after 4 weeks | 16 | 9 | n.a. | n.a. | n.a. | n.a | 14 |

### Example 7

This test differs from example 6 for the presence of lindane, considered one of the most resistant to biological treatment. The relative metabolites were also monitored.

| | |
|---|---|
| Quantity of soil | 1000 kg |
| Type of soil (pH = 7.8, T = 12°C) | sandy-agglomerate |
| Temperature in the reactor | 48°C |
| Temperature in the piles | 21°C minimum, 50°C maximum |
| Bio-stimulators used: natrel (as concentrated nutrient) | 0.25 g/kg |
| pedian | 5 g/kg |

The breaking-down progress of the various contaminants are given hereunder (in mg/kg).

| Material | lindane | Malathion | α HCN | β HCN | malaoxane |
|---|---|---|---|---|---|
| Initial | 500 | 1000 | -- | -- | -- |
| Reactor after inoculum (24 hours) | 337 | 1085 | 2,4 | n.a. | n.a. |
| Mixing with "green" material | 230 | 895 | 1,2 | n.a. | n.a. |
| Piles after 10 days | 4 | n.a. | n.a. | n.a. | n.a |
| Piles after 4 week | 2 | n.a. | n.a. | n.a. | n.a |

### Example 8

Soil coming from an industrial site (300 tons) was treated in accordance with this invention. The bioremediation process started on June 14.

The breaking-down progress of the various contaminants are given hereunder (in mg/kg).

| Material | 14/06 | 04/07 | 26/07 | 06/09 | 29/10 |
|---|---|---|---|---|---|
| trifluoraline | 70.00 | 63.00 | 32.00 | 18.50 | 3.60 |
| atrazine | 9.50 | 6.50 | 3.00 | 1.80 | 0.69 |
| simazine | 12.00 | 11.00 | 0.60 | 0.19 | 0.38 |
| propazine | 6.50 | 6.00 | 0.60 | 0.10 | 0.38 |
| DDE | 1.60 | 1.50 | 1.30 | 1.10 | 0.10 |
| DDD | 2.00 | 3.00 | 4.10 | 1.70 | 0.33 |
| DDT | 1.50 | 2.00 | 1.50 | 1.20 | 0.24 |

### Example 9

Piles were formed from a soil contaminated with hydrocarbons, PAHs and phenols after activation in the reactor.

The compost step lasted 33 days.
Type of soil (pH = 6.3) sandy-silt
Bio-stimulators used:
natrel (as concentrated nutrient)
pedian
70 vol.% contaminated soil were mixed with 25 vol.% vegetable material and 5 vol.% perlite; the blend thus obtained was inoculated with the above-mentioned bio-stimulators (2.5 Kg of pedian/m³ contaminated soil and 1.0 l of natrel/m³ contaminated soil).

The breaking-down progress of the various contaminants are given hereinbelow (in mg/kg).

| Material | % d.s. | pH | Hydrocarbons + PAH + Phenols mg/Kg | % Degradation |
|---|---|---|---|---|
| contaminated soil (CS) | 54.5 | 6.3 | 3023.8 | |
| blend CS + Veg. Mat. Before reactor packing | 58.6 | 7.2 | 1977.3 | 0.0 |
| CS + Veg.Mat. after 33 days | 59.3 | 7.3 | 389.3 | 80.3 |

| | | | | |
|---|---|---|---|---|
| % d.s. = percent dry substance | | | | |

The estimated period for reaching 99% degradation was 90 days.

The measurement of the amounts of each contaminant in the blend contaminated soil/vegetable material gave the following values:

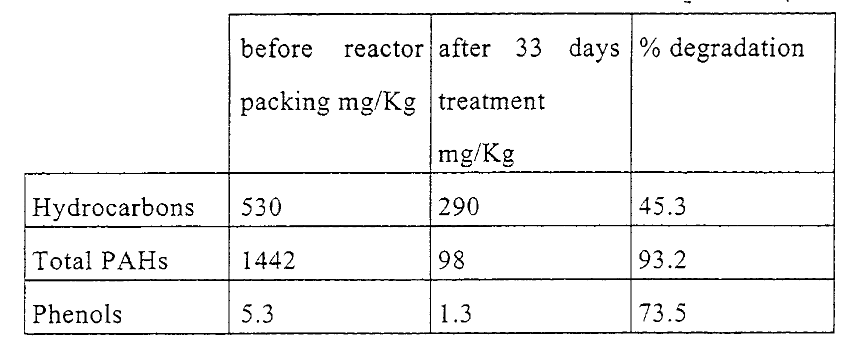

### Example 10

Piles were formed from a soil contaminated with hydrocarbons after activation in the reactor.

The composting step lasted 20 days.
Type of soil sandy-silt
Bio-stimulators used:
natrel (as concentrated nutrient)
pedian
80 vol.% contaminated soil were mixed with 15 vol.% vegetable material and 5 vol.% perlite; the blend was inoculated with the above-mentioned bio-stimulators (2.5 Kg of pedian/m³ contaminated soil and 1.5 l of natrel/m³ contaminated soil).

The breaking-down progress of the contaminants are given hereinbelow (in mg/kg).

| Material | % d.s. | pH | Hydrocarbons mg/Kg | % Degradation |
|---|---|---|---|---|
| blend CS + Veg. Mat. Before reactor packing | 76.9 | 7.6 | 468 | 0.0 |
| blend CS + Veg.Mat. after 33 days | 79.8 | 7.3 | 246 | 47.4 |

| | | | | |
|---|---|---|---|---|
| % d.s. = percent dry substance | | | | |

The estimated time to reach 99% was of 45 days.

## Claims

1. The use of chitin or a derivative thereof, alone or in combination with adjuvants selected from nutrients, salts, vitamins, enzymes, emulsifiers, accelerators and moisture retainers, for the bioremediation of soils contaminated by hard-to-degrade contaminants selected from chlorinated organic compounds and polyaromatic hydrocarbons.

2. Use according to claim 1, wherein chitin or derivatives thereof are added in amounts of 0.1 to 5.0 Kg per m³ of soil.

3. Use according to claims 1-2, wherein the chlorinated organic compounds are selected from the group consisting of TCE, PCE, PAH, vinyl chloride, PCBs, DDT, chlordane, heptachlor.

4. Use according to claims 1-2, wherein chitin is combined with nutrients selected from cellulose, starch, glucose.

5. A method for the bioremediation of soils contaminated by hard-to-degrade substances selected from chlorinated organic compounds and polyaromatic hydrocarbons, which comprises:
a) bringing the soil contaminated in depth to the surface, so that it is treated on-site or taken away to a disposal platform for treatment off-site;
b) mixing the soil with vegetable material to form piles;
c) adding chitin and/or derivatives thereof to the rest of the mass (contaminated soil and vegetal material);
d) treating said piles in accordance with conventional composting methods.

6. A method according to claim 5, wherein step c) is carried out on a part of the mixture from step b) in a reactor, to produce a super-active inoculum, which is then added to the rest of the mixture.

7. A method according to claims 5-6, further comprising the steps of air sparging, soil vapor extraction and/or bio-venting.

## Patentansprüche

1. Verwendung von Chitin oder eines Derivats davon, allein oder in Kombination mit Adjuvanzien, die aus Nährstoffen, Salzen, Vitaminen, Enzymen, Emulgatoren, Beschleunigern und Feuchtigkeitshaltemitteln ausgewählt sind, zur biologischen Sanierung von Böden, die mit schwer abzubauenden Kontaminanten, die aus chlorierten organischen Verbindungen und polyaromatischen Kohlenwasserstoffen ausgewählt sind, kontaminiert sind.

2. Verwendung nach Anspruch 1, wobei Chitin oder Derivate davon in Mengen von 0,1 bis 5,0 kg pro m³ Boden zugesetzt werden.

3. Verwendung nach Anspruch 1 oder 2, wobei die chlorierten organischen Verbindungen aus der Gruppe, bestehend aus TCE, PCE, PAH, Vinylchlorid, PCBs, DDT, Chlordan, Heptachlor, ausgewählt sind.

4. Verwendung nach Anspruch 1 oder 2, wobei Chitin mit Nährstoffen, ausgewählt aus Cellulose, Stärke, Glucose, kombiniert wird.

5. Verfahren zur biologischen Sanierung von Böden, die mit schwer abzubauenden Substanzen, welche aus chlorierten organischen Verbindungen und polyaromatischen Kohlenwasserstoffen ausgewählt sind, kontaminiert sind, umfassend:
a) Bringen des Bodens, der in der Tiefe kontaminiert ist, an die Oberfläche, sodass er an Ort und Stelle behandelt wird oder zu einer Deponieplattform zur Behandlung an eine Nebenanlage gebracht wird;
b) Vermischen des Bodens mit pflanzlichem Material unter Bildung von Haufen;
c) Versetzen des Restes der Masse (kontaminierter Boden und pflanzliches Material) mit Chitin und/oder Derivaten davon;
d) Behandeln der Haufen nach herkömmlichen Kompostierverfahren.

6. Verfahren nach Anspruch 5, wobei Schritt c) an einem Teil des Gemisches aus Schritt b) in einem Reaktor durchgeführt wird, um ein superaktives Inoculum herzustellen, das dann zu dem Rest des Gemisches gegeben wird.

7. Verfahren nach Anspruch 5 oder 6, das außerdem die Schritte Luftzerstäubung, Bodendampfextraktion und/oder Biolüftung umfasst.

## Revendications

1. L'utilisation de chitine ou d'un dérivé de chitine, isolément ou en association avec des adjuvants choisis parmi des substances nutritives, des sels, des vitamines, des enzymes, des émulsifiants, des accélérateurs et des conservateurs d'humidité, pour la bioremédiation de sols pollués par des polluants difficiles à dégrader choisis parmi les composés organiques chlorés et les hydrocarbures polyaromatiques.

2. Utilisation selon la revendication 1, dans laquelle la chitine ou ses dérivés sont ajoutés en des quantités de 0,1 à 5,0 kg par m³ de sol.

3. Utilisation selon les revendications 1-2, dans laquelle les composés organiques chlorés sont choisis dans le groupe formé par TCE, PCE, PAH, le chlorure de vinyle, les PCB, DDT, le chlordane, l'heptachlore.

4. Utilisation selon les revendications 1-2, dans laquelle la chitine est associée à des substances nutritives choisies parmi la cellulose, l'amidon, le glucose.

5. Un procédé pour la bioremédiation de sols pollués par des substances difficiles à dégrader choisies parmi les composés organiques chlorés et les hydrocarbures polyaromatiques, qui consiste à :
a) amener à la surface le sol pollué en profondeur, de sorte qu'il soit traité sur site ou emporté vers une plate-forme de traitement pour un traitement hors site ;
b) mélanger le sol avec de la matière végétale pour former des tas ;
c) ajouter de la chitine et/ou des dérivés de chitine au reste de la masse (sol pollué et matière végétale) ;
d) traiter lesdits tas selon des techniques de compostage classiques.

6. Un procédé selon la revendication 5, dans lequel l'étape c) est exécutée sur une partie du mélange provenant de l'étape b) dans un réacteur, pour produire un inoculum hyper-actif, qui est ensuite ajouté au reste du mélange.

7. Un procédé selon les revendications 5-6, comprenant de plus les étapes d'injection d'air, traitement du sol par extraction à la vapeur et/ou traitement biologique avec aération.
